# EUROPEAN PATENT SPECIFICATION

(11) **EP 1 080 046 B1**
(45) Date of publication and mention of the grant of the patent: **16.01.2002**
(21) Application number: 99917058.2
(22) Date of filing: 21.04.1999
(51) Int. Cl.: C03B 9/33, C03B 9/04

(54) **METHOD FOR AUTOMATICALLY MANUFACTURING GOBLETS, VASES AND GLASS CONTAINERS IN GENERAL**
VERFAHREN ZUR AUTOMATISHEN HERSTELLUNG VON TRINKBECHERN, VASEN UND GLASCONTAINERN IM ALLGEMEINEN
PROCEDE GENERAL DE FABRICATION AUTOMATIQUE DE GOBELET, VASES, ET VERRES

(30) Priority: 24.04.1998 IT PR980024
(43) Date of publication of application: 07.03.2001
(73) Proprietor: Bormioli Rocco & Figlio S.p.A., 43100 Parma (PR) (IT)
(72) Inventor: DI GIUSEPPANTONIO, Vincenzo, I-43036 Fidenza (IT)
(74) Representative: Gotra, Stefano
(86) International application number: IT9900100
(87) International publication number: WO9955629

(56) References cited:
- BE-A- 450 774
- US-A- 1 908 306
- US-A- 2 269 010
- US-A- 2 276 399
- US-A- 3 453 096

## Description

### TECHNICAL FIELD AND BACKGROUND ART.

The present invention relates to a method for manufacturing goblets, vases and glass containers in general.

The invention can be classified in the sector relating to methods for manufacturing goblets, vases and glass containers in general and, in particular, with reference to goblets, such containers comprising a stem and a foot extending from a bowl.

The known art refers to a method for manufacturing vases and other glass containers, with a bowl in one colour (for example transparent) and foot in a different colour, which involves using differently coloured pastes processed with different techniques.

The bowl is made by means of blowing or moulding a gob of molten glass, with suitable dimensions, which is inserted into a mould having the same shape as the bowl itself.

The foot, which may be of a different colour, in turn has in its upper part a stem which is connected at the top to the bowl and at the bottom to a disk which forms one piece with the stem.

Both parts, namely stem and disk, are made by means of a gob of molten glass which is pressed inside a mould in the form of an open shell. The shell, in which the two cavities have the shape of the disk and the bottom stem, is kept closed above the overturned bowl until the two parts are joined together.

This method has the drawback that the two parts, bowl and foot, which are differently coloured are quite separate and do not allow one to see a superimposed effect of the colours of the two parts, which moreover is very suggestive.

Furthermore, the bowl is more delicate since it has a critical point at the joint between bowl and foot.

With the known art, in the case where it is required to form a goblet with three different colours for the bowl, the stem and the disk, it is required to perform two separate pressing steps, namely a first step involving pressing of a gob onto the bowl in order to form the stem and, subsequently, another step involving pressing of a gob onto the stem in order to form the disk; this results in high manufacturing costs.

Moreover from BE-A-450774 it is known a method for obtaining a goblet made by a glass bowl and a metal stalk. The stalk is provided with a cavity and the bowl is provided with a protrusion that enter in the cavity.

### DISCLOSURE OF INVENTION.

It is the object of the invention to make the joint between the bowl and the stem stronger. The object of a preferred embodiment of the invention is to provide a method of manufacturing a goblet, vase or container comprising a stem and a foot extending from a bowl which is characterized by three different colours obtained using glass gobs in two colours, without having to perform three different mouldings for each colour, with higher costs and longer production times.

Said objects are fully achieved by the subject of the present invention which is characterized by the contents of the claim 1.

### BRIEF DESCRIPTION OF DRAWINGS.

These and other characteristic features will emerge more clearly from the following description of a preferred embodiment illustrated, purely by way of a non-limiting example of embodiment, in the accompanying plates of drawings, in which:

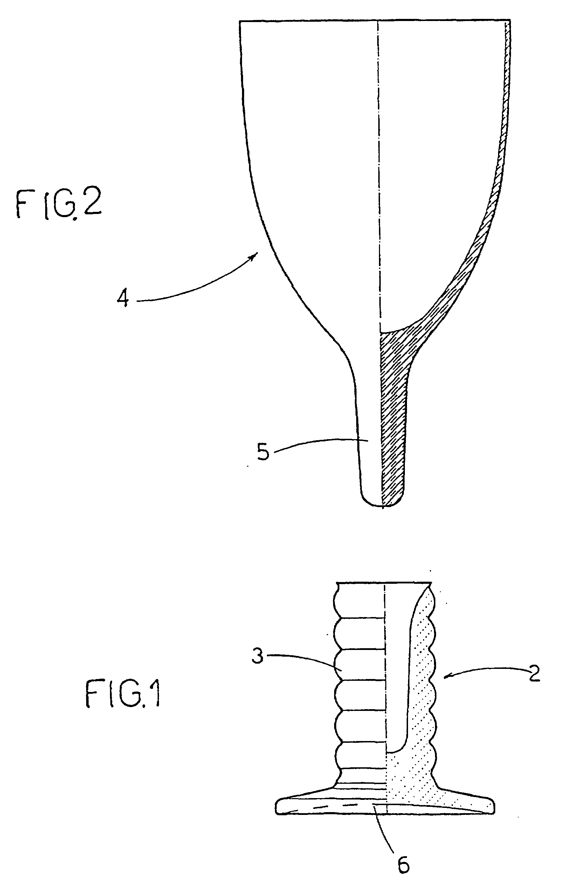

- Figure 1 shows a front view of the foot;

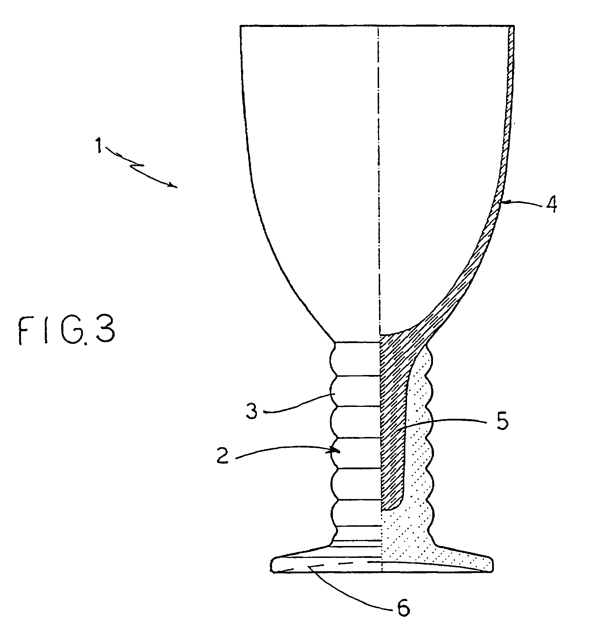

- Figure 2 shows a front view of the bowl;
- Figure 3 shows a front view of the goblet.

### BEST MODE FOR CARRYING OUT THE INVENTION.

With reference to the Figures, the method envisages manufacturing a goblet 1 comprising a bowl 4 and a foot 2; the latter is composed of a stem 3 which forms one piece with a disk 6 supporting the foot so as to keep it in equilibrium in a vertical position.

The method consists in manufacturing the bowl 4 using a first gob of molten glass, in a precisely determined quantity, which is hot-blown in a mould having a shape such that the bowl 4 terminates at the bottom in a base-piece 5 which is located in the zone for fixing the foot, and extends from the bowl.

Then the bowl is overturned inside a mould so as to form the foot 2 which is made by means of the injection or pressure moulding technique using a press with a shell-shaped mould. During said step, a second gob of glass, in addition to forming the disk 6, lines the base-piece 5.

If a gob with a colour different from that of the bowl is used for formation of the foot, a new chromatic effect is produced by the combination of two colours. In order to obtain said effect, it is obviously necessary to use, for formation of the foot, a glass with a colour other than a transparent colour.

This method ensures that the structure of the goblet 1 is more resistant to knocks and that, moreover, by using, as mentioned, different colours for the bowl 4 and the foot 2, it is possible to obtain a third colour in the central part of the stem 7 merely owing to the effect of superimposing the two differently coloured types of glass without having to perform three different mouldings.

For example a blue-coloured foot 2 and a yellow-coloured bowl 4 produce a green colour in the central part.

According to a possible variation of the method described above, the bowl may also be made by means of moulding or injection provided that it has a base-piece 5.

According to the variation of embodiment shown, the base-piece 5 may have longitudinal or horizontal grooves or faceted surfaces which in any case create further differently coloured chromatic effects due to the reflections and refractions of the light rays when passing through these surfaces.

A further variation of embodiment described may be characterized by a base-piece 5 with a shape different from a cylindrical shape; for example, with a square or hexagonal or any polygonal cross-section, or it may also have a spherical shape.

Even in the case where the bowl and foot are made with the same colour, the stem assumes a particular aesthetic effect due to lining of the base-piece which, as mentioned above, may have shapes and cross-sections different from that shown: it could be shaped, for example, in the manner of flower or the like.

In the description, specific reference has been made to the manufacture of a goblet, but it is obvious that the method described may also be applied to the manufacture of a vase or a container in general provided that it has a foot with a stem made of transparent or coloured glass.

## Claims

1. Method for automatically manufacturing goblets, vases and glass containers in general, comprising the following steps:
- blowing or moulding a first gob of molten glass into a bowl (4) provided with a base-piece (5) extending from the bottom part of the bowl and located in the zone for fixing a foot (2);
- moulding the foot (2) by means of pressing or injection of a second gob of glass, which is transparent, thereby enclosing the base-piece (5) extending from the bottom part of the bowl (4) within a stem (3) of the foot (2).

2. Method for manufactiuing goblets, vases and glass containers in general according to Claim 1, **characterized in that** the base-piece (5) has longitudinal or horizontal grooves or faceted surfaces of any shape for the purpose of creating a chromatic effect with multiple colouring due to the superimposing or intersection of light rays of different colours.

3. Method for manufacturing goblets, vases and glass containers in general according to Claim 1, **characterized by** the formation of a base-piece with a horizontal, square, hexagonal or any kind of polygonal cross-section.

4. Method according to Claim 1, **characterized in that** the base-piece has a spherical shape.

5. Method according to Claim 1, **characterized in that** the first gob, and so the bowl and the second gob, and so the foot are made of transparent glass having the same colour.

6. Method according to Claim 1, **characterized in that** the first gob, and so the bowl and the second gob, and so the foot are made of transparent glass having different colours.

## Patentansprüche

1. Verfahren zur automatischen Herstellung von Trinkbechern, Vasen und Glascontainern im allgemeinen, das folgende Schritte aufweist:
- Blasen oder Formen eines Kelches (4) aus einem ersten geschmolzenen Glaskülbel, welcher Kelch im Ansatzbereich eines Fusses (2) einen sich von seinem unteren Bereich aus erstreckenden Schaft (5) aufweist;
- Pressen oder Spritzen des Fusses (2) aus einem zweiten durchsichtigen Glaskülbel, wodurch der sich von dem unteren Bereich des Kelches aus erstreckende Schaft (5) von einem Stiel (3) des Fusses (2) umhüllt wird.

2. Verfahren zur Herstellung von Trinkbechern, Vasen und Glasbehältern im allgemeinen nach Anspruch 1, **dadurch gekennzeichnet, dass** der Schaft (5) in Längs- und Horizontalrichtung ausgerichtete Rillen oder Facettierungen von beliebiger Form zur Erzielung eines Vielfarbeneffektes aufweist, der durch Überlappung oder Überschneidung von verschiedenfarbigen Lichtstrahlen entsteht.

3. Verfahren zur Herstellung von Trinkbechern, Vasen und Glascontainern im allgemeinen nach Anspruch 1, durch die Herstellung eines im Querschnitt vier-, sechs- oder vieleckigen Schaftes **gekennzeichnet.**

4. Verfahren nach Anspruch 1, **dadurch gekennzeichnet, dass** der Schaft eine Kugelform aufweist.

5. Verfahren nach Anspruch 1, **dadurch gekennzeichnet, dass** der erste Külbel, das heisst der Kelch, und der zweite Külbel, das heisst der Fuss, aus durchsichtigem Glas gleicher Farbe hergestellt sind.

6. Verfahren nach Anspruch 1, **dadurch gekennzeichnet, dass** der erste Külbel, das heisst der Kelch, und der zweite Külbel, das heisst der Fuss aus verschiedenfarbigem durchsichtigem Glas hergestellt sind.

## Revendications

1. Procédé général de fabrication automatique de gobelets, vases et récipients en verre en général, comprenant les phases suivantes:
- soufflage et moulage d'une première goutte de verre en fusion en une coupe (4) pourvue d'une embase (5) s'étendant depuis la base de la coupe et située dans la zone de fixation à un pied (2);
- moulage du pied (2) par compression ou injection d'une seconde goutte de verre transparent, en renfermant l'embase (5) s'étendant depuis la base de la coupe (4) à l'intérieur de la tige (3) du pied (2).

2. Procédé de fabrication automatique de gobelets, vases et récipients en verre en général selon la revendication 1, **caractérisé en ce que** l'embase (5) présente des rainures longitudinales ou horizontales, ou des surfaces facettées de toutes formes, afin de créer un effet chromatique avec des colorations multiples dûes à la superposition ou intersection des rayons de lumière de différentes couleurs.

3. Procédé de fabrication automatique de gobelets, vases et récipients en verre en général selon la revendication 1, **caractérisé par** la formation d'une embase à section horizontale, carrée, hexagonale ou poligonale.

4. Procédé de fabrication automatique de gobelets, vases et récipients en verre en général selon la revendication 1, **caractérisé en ce que** l'embase a une forme sphérique.

5. Procédé de fabrication automatique de gobelets, vases et récipients en verre en général selon la revendication 1, **caractérisé en ce que** la première goutte, ainsi que la coupe, la seconde goutte et le pied sont réalisés en verre transparent de la même couleur.

6. Procédé de fabrication automatique de gobelets, vases et récipients en verre en général selon la revendication 1, **caractérisé en ce que** la première goutte, ainsi que la coupe, la seconde goutte et le pied, sont réalisés en verre transparent de couleurs différentes.
